# EUROPEAN PATENT APPLICATION

(11) **EP 4 787 951 A1**
(43) Date of publication of application: **05.08.2026**
(21) Application number: 24884543.0
(22) Date of filing: 23.10.2024
(51) Int. Cl.: H04W 28/16

(54) **COMMUNICATION METHOD AND FUNCTIONAL ENTITY**

(30) Priority: 31.10.2023 CN 202311438919
(71) Applicant: HUAWEI TECHNOLOGIES CO., LTD., Shenzhen, Guangdong 518129 (CN)
(72) Inventor: LI, Lele, Shenzhen, Guangdong 518129 (CN); YE, Shuxin, Shenzhen, Guangdong 518129 (CN); LI, Yexing, Shenzhen, Guangdong 518129 (CN); YU, Yijun, Shenzhen, Guangdong 518129 (CN)
(74) Representative: Gill Jennings & Every LLP
(86) International application number: PCT/CN2024/126743
(87) International publication number: WO 2025/092539

(57) **Abstract**

A communication method and a function entity are provided, and may be used in the field of communication technologies. The communication method may include: A second function entity sends request information to a first function entity, and the first function entity receives the request information, where the request information may be used for requesting to check whether a requirement related to a logical network (for example, a slice configuration) can be satisfied, where the logical network is to be created. In response to determining that the requirement (for example, the slice configuration) cannot be satisfied, the first function entity sends response information including first time information to the second function entity, and the second function entity receives the response information, where the first time information indicates that the requirement can be satisfied in a future first time period. According to the method provided in embodiments of this application, a success rate of creating a logical network can be effectively improved.

## Description

This application claims priority to Chinese Patent Application No. 202311438919.4, filed with the China National Intellectual Property Administration on October 31, 2023 and entitled "COMMUNICATION METHOD AND FUNCTION ENTITY", which is incorporated herein by reference in its entirety.

### TECHNICAL FIELD

This application relates to the field of communication technologies, and in particular, to a communication method and a function entity.

### BACKGROUND

A network slice (networkslice) is a plurality of end-to-end logical networks virtualized based on a physical network. All logical networks have different network features, and different network functions can adapt to different types of service requirements. Different end-to-end network slices can be used for implementing end-to-end isolation without affecting each other.

In a current method for creating a network slice, after receiving a feasibility check and reservation job creation request, an element management system (element management system, EMS) may perform slice feasibility check based on network performance of a network domain managed by the EMS and a slice configuration in the foregoing request. If the network performance of the network domain managed by the EMS cannot satisfy the slice configuration, a service operation chooses not to create a network slice, causing a network slice creation failure.

Therefore, how to improve a success rate of creating a logical network (for example, a network slice or a network slice subnet) needs to be urgently resolved.

### SUMMARY

Embodiments of this application provide a communication method and a function entity, to effectively improve a success rate of creating a logical network. The logical network may be a network slice or a network slice subnet.

According to a first aspect, an embodiment of this application provides a communication method, where the communication method may be applied to a first function entity, the first function entity may be an element management entity or a network management entity, the element management entity may be configured to perform a function or a step implemented by an EMS, the network management entity may be configured to perform a function or a step implemented by a network management system (network management system, NMS), and the method includes:
receiving request information, where the request information is used for requesting to check whether a requirement related to a logical network can be satisfied, where the logical network is to be created; and in response to determining that the requirement cannot be satisfied, sending response information including first time information, where the first time information indicates that the requirement can be satisfied in a future first time period.

In this embodiment of this application, when the requirement (for example, a slice configuration) of a to-be-created logical network cannot be satisfied, the first function entity sends the response information including the first time information. After receiving the response information, a second function entity can effectively learn when the requirement can be satisfied. Therefore, the second function entity may create a network slice (or a network slice subnet) in the first time period, to improve a success rate of creating the network slice (or the network slice subnet). Especially for a scenario in which flexible time and high network performance are required, the first time information is sent, so that the second function entity creates, in the first time period indicated by the first time information, a logical network (for example, a network slice or a network slice subnet) that satisfies a high requirement. This not only effectively improves a success rate of creating the logical network, but also effectively improves service experience.

In a possible implementation, the request information further includes second time information, and the second time information indicates an expected second time period.

In this embodiment of this application, the expected second time period is added to the request information, so that the first function entity can effectively learn of a time period expected by the second function entity, thereby improving information exchange efficiency.

In a possible implementation, the first time period is a subset of the second time period.

In a possible implementation, the response information further includes confidence information, and the confidence information indicates a probability that the requirement is satisfied in the first time period.

In this embodiment of this application, the first function entity includes the confidence information in the response information, so that the second function entity can select the first time period with reference to a confidence, thereby further improving the success rate of creating the end-to-end network slice.

In a possible implementation, the request information further includes request indication information, and the request indication information is used for requesting to include the first time information in the response information.

In this embodiment of this application, the request indication information is added to the request information, so that the first function entity can effectively learn that the first function entity needs to predict a future time period in which the requirement, for example, the slice configuration, can be satisfied. Therefore, for the scenario in which the flexible time and the high network performance are required, the first function entity may predict the future time period based on the request indication information, and increase the success rate of creating the logical network without reducing a requirement related to the to-be-created logical network on network performance.

In a possible implementation, the logical network is a network slice or a network slice subnet, a requirement related to the network slice includes a slice configuration of the network slice, and a requirement related to the network slice subnet includes a slice configuration of the network slice subnet.

In this embodiment of this application, when the method shown in the first aspect or any possible implementation is applied to the element management entity, the requirement may include the requirement related to the network slice subnet. When the method shown in the first aspect or any possible implementation is applied to the network management entity, the requirement may include the requirement related to the network slice.

In a possible implementation, before sending the response information including the first time information, the method further includes: determining the first time information by using a network digital twin (network digital twin, NDT) model, where an input of the NDT model includes network performance of a network domain managed by the first function entity, a slice configuration in the requirement, and current time, and an output of the NDT model includes the first time information.

In a possible implementation, after receiving the request information, the method further includes: determining, based on a slice configuration of the network slice in the requirement, a slice configuration of a network slice subnet corresponding to one or more element management entities; and sending request information including the slice configuration of the network slice subnet to each of the one or more element management entities.

In a possible implementation, the slice configuration of the network slice subnet includes at least one of the following: a maximum quantity of access devices of the to-be-created network slice subnet; an uplink latency of the to-be-created network slice subnet; a downlink latency of the to-be-created network slice subnet; an uplink rate of the to-be-created network slice subnet; or a downlink rate of the to-be-created network slice subnet.

In a possible implementation, the slice configuration of the network slice includes at least one of the following: a maximum quantity of access devices of the to-be-created network slice; an uplink latency of the to-be-created network slice; a downlink latency of the to-be-created network slice; an uplink rate of the to-be-created network slice; or a downlink rate of the to-be-created network slice.

According to a second aspect, an embodiment of this application provides a communication method, where the communication method may be applied to a second function entity, the second function entity may include a network management entity or a service operation entity, the network management entity may be configured to perform a function or a step implemented by an NMS, the service operation entity may be configured to perform a function or a step implemented by a service operation server, and the method includes:
sending request information, where the request information is used for requesting to check whether a requirement related to a logical network can be satisfied, where the logical network is to be created; and receiving response information, where the response information includes first time information, and the first time information indicates that the requirement can be satisfied in a future first time period.

In a possible implementation, the request information further includes second time information, and the second time information indicates an expected second time period.

In a possible implementation, the first time period is a subset of the second time period.

In a possible implementation, the response information further includes confidence information, and the confidence information indicates a probability that the requirement is satisfied in the first time period.

In a possible implementation, the request information further includes request indication information, and the request indication information is used for requesting to include the first time information in the response information.

In a possible implementation, the logical network is a network slice or a network slice subnet, a requirement related to the network slice includes a slice configuration of the network slice, and a requirement related to the network slice subnet includes a slice configuration of the network slice subnet.

In this embodiment of this application, when the method shown in the second aspect or any possible implementation is applied to the network management entity, the requirement may include the requirement related to the network slice subnet. When the method shown in the second aspect or any possible implementation is applied to the service operation entity, the requirement may include the requirement related to the network slice.

In a possible implementation, the method further includes: creating, in the first time period, the network slice that satisfies the requirement.

In a possible implementation, before sending the request information, the method further includes: receiving, from the service operation entity, the request information that includes a slice configuration of the network slice; and determining, based on the slice configuration of the network slice, the slice configuration of the network slice subnet corresponding to one or more element management entities.

In a possible implementation, the slice configuration of the network slice includes at least one of the following: a maximum quantity of access devices of the to-be-created network slice; an uplink latency of the to-be-created network slice; a downlink latency of the to-be-created network slice; an uplink rate of the to-be-created network slice; or a downlink rate of the to-be-created network slice.

In a possible implementation, the slice configuration of the network slice subnet includes at least one of the following: a maximum quantity of access devices of the to-be-created network slice subnet; an uplink latency of the to-be-created network slice subnet; a downlink latency of the to-be-created network slice subnet; an uplink rate of the to-be-created network slice subnet; or a downlink rate of the to-be-created network slice subnet.

According to a third aspect, an embodiment of this application provides a function entity, configured to perform the method in the first aspect, the second aspect, or any possible implementation. The function entity includes a unit that performs the method in the first aspect, the second aspect, or any possible implementation.

According to a fourth aspect, an embodiment of this application provides a function entity. The function entity includes a processor, configured to perform the method shown in the first aspect, the second aspect, or any possible implementation. The processor is configured to execute a program stored in a memory. When the program is executed, the method shown in the foregoing aspects or any possible implementation is performed.

In a possible implementation, the memory is located outside the foregoing function entity.

In a possible implementation, the memory is located inside the foregoing function entity.

In this embodiment of this application, the processor and the memory may alternatively be integrated into one component. In other words, the processor and the memory may alternatively be integrated together.

In a possible implementation, the function entity further includes a transceiver, and the transceiver is configured to receive information or send information.

According to a fifth aspect, an embodiment of this application provides a function entity, where the function entity includes a logical circuit and an interface, the logical circuit is coupled to the interface, the interface is configured to input and/or output information, and the logical circuit is configured to perform the method according to the first aspect, the second aspect, or any possible implementation.

According to a sixth aspect, an embodiment of this application provides a computer-readable storage medium, where the computer-readable storage medium is configured to store a computer program, and when the computer program is run on a computer, the method shown in the first aspect, the second aspect, or any possible implementation is performed.

According to a seventh aspect, an embodiment of this application provides a computer program product, where the computer program product includes a computer program or computer code, and when the computer program product runs on a computer, the method shown in the first aspect, the second aspect, or any possible implementation is performed.

According to an eighth aspect, an embodiment of this application provides a computer program, and when the computer program is run on a computer, the method shown in the first aspect, the second aspect, or any possible implementation is performed.

According to a ninth aspect, an embodiment of this application provides a communication system, where the communication system includes an element management entity and a network management entity, the element management entity is configured to perform the method shown in the first aspect, and the network management entity is configured to perform the method shown in the second aspect; or the communication system includes a network management entity and a service operation entity, the network management entity is configured to perform the method shown in the first aspect, and the service operation entity is configured to perform the method shown in the second aspect.

### BRIEF DESCRIPTION OF DRAWINGS

FIG. 1 is a diagram of a network slice scenario according to an embodiment of this application;
FIG. 2 is a diagram of an architecture of a communication system according to an embodiment of this application;
FIG. 3 is a diagram of a network slice feasibility check method according to an embodiment of this application;
FIG. 4a is a schematic flowchart of a communication method according to an embodiment of this application;
FIG. 4b is a schematic flowchart of a communication method according to an embodiment of this application;
FIG. 5 is a schematic flowchart of a communication method according to an embodiment of this application;
FIG. 6 is a diagram of a network slice feasibility check method according to an embodiment of this application;
FIG. 7 is a diagram of a structure of a function entity according to an embodiment of this application;
FIG. 8 is a diagram of a structure of a function entity according to an embodiment of this application; and
FIG. 9 is a diagram of a structure of a function entity according to an embodiment of this application.

### DESCRIPTION OF EMBODIMENTS

For ease of understanding technical solutions of this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described in this specification may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

Embodiments of this application provide a communication method and a function entity, to effectively improve a success rate of creating a logical network.

In embodiments of this application, the logical network may be a network slice or a network slice subnet. The network slice may also be referred to as a slice for short.

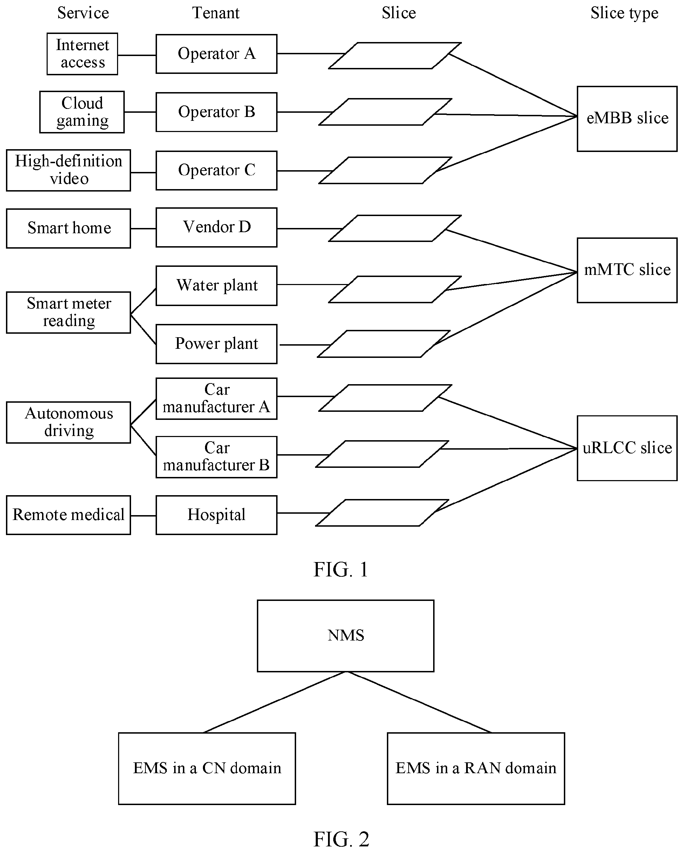

FIG. 1 is a diagram of a network slice scenario according to an embodiment of this application. As shown in FIG. 1, slice types may include an enhanced mobile broadband (enhanced mobile broadband, eMBB) slice, an enhanced machine-type communication (enhanced machine-type communication, mMTC) slice, and an ultra-reliable and low-latency communication (ultra-reliable and low-latency communication, uRLCC) slice. As shown in FIG. 1, services may include internet access, cloud gaming, high-definition video, a smart home, smart meter reading, autonomous driving, and remote medical. A network slice may be used in various services, which are not listed herein one by one. The slice types, the services, and tenants shown in FIG. 1 are merely examples, and should not be construed as a limitation on embodiments of this application.

FIG. 2 is a diagram of an architecture of a communication system according to an embodiment of this application. As shown in FIG. 2, the communication system may include a network management system (network management system, NMS) and an element management system (element management system, EMS). For example, the NMS may include one or more function entities, and the EMS may include one or more function entities. For example, a function of the NMS may alternatively be implemented by using one function entity, one chip, or the like, for example, one network management entity, and a function of the EMS may alternatively be implemented by using one function entity, one chip, or the like, for example, one element management entity. Specific product forms or names of the EMS and the NMS are not limited in embodiments of this application. For ease of description, the NMS and the EMS are used as examples in the following to describe the method provided in embodiments of this application, but should not be construed as a limitation on embodiments of this application.

In embodiments of this application, the NMS may obtain, through decomposition based on a requirement related to a to-be-created network slice, a requirement related to a network slice subnet (networkslicesubnet) corresponding to each domain. For example, the NMS may obtain, through decomposition, a requirement related to a to-be-created network slice subnet corresponding to a core network (core network, CN) domain and a requirement related to a to-be-created network slice subnet corresponding to a radio access network (radio access network, RAN) domain. The CN domain and the RAN domain shown herein are merely examples. In specific implementation, the NMS may further obtain a larger quantity of domains or a smaller quantity of domains through decomposition. This is not limited in embodiments of this application.

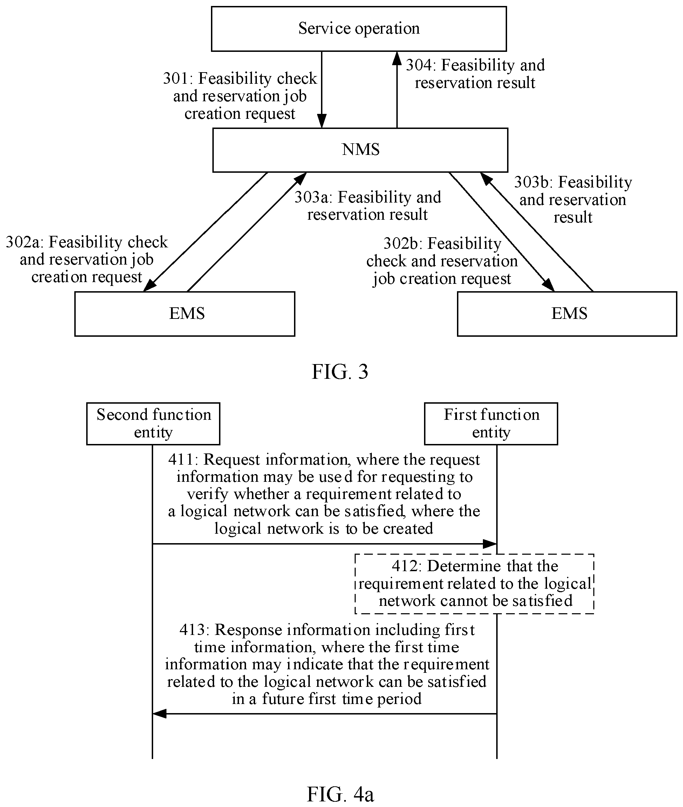

After obtaining the requirement related to each domain through decomposition, the NMS delivers request information to each domain like an EMS in the CN domain and an EMS in the RAN domain. For specific functions of the NMS and the EMS, refer to FIG. 3 to FIG. 6. Functions of the NMS and the EMS shown in embodiments of this application are merely examples. In specific implementation, the NMS and the EMS may further have more functions, which are not shown one by one in embodiments of this application.

FIG. 3 is a diagram of a network slice feasibility check method according to an embodiment of this application. As shown in FIG. 3, the method includes the following steps.

301: A service operation sends a feasibility check and reservation job creation request (feasibilitycheckandreservationjobcreationrequest) to an NMS, and correspondingly, the NMS receives the feasibility check and reservation job creation request.

When a new end-to-end network slice needs to be provisioned (or created), the service operation may send the feasibility check and reservation job creation request to the NMS. The feasibility check and reservation job creation request shown herein is merely an example. For example, the service operation may send a feasibility check request to the NMS. Whether a reservation job creation request is included is not limited in this embodiment of this application. For example, the request sent by the service operation to the NMS may include a feasibility check, and include the reservation job creation request or do not include the reservation job creation request.

For ease of description, the feasibility check and reservation job creation request is used as an example for description below. For example, the request may include a slice configuration (sliceprofile). The slice configuration may indicate a requirement needed by a new end-to-end service on network performance, or the slice configuration may indicate a requirement needed by the to-be-created network slice on network performance. For example, the request may further include at least one of the following: resource reservation (resourcereservation) or requested reservation expiration (requestedreservationexpiration). The resource reservation may indicate whether to reserve a resource for the to-be-created network slice. The requested reservation expiration may indicate an expected reservation period (or an expected validity period) of the reserved resource in a case in which the resource is reserved.

For the service operation, the NMS can be referred to as a network slice (networkslice, NS) management service (managementservice, MnS) provider (NS MnS provider). For the NMS, the service operation may be referred to as a network slice management service consumer (NS MnS consumer). The service operation shown in embodiments of this application may also be referred to as a service operation server. A specific form of the service operation is not limited in embodiments of this application. For example, a function of the service operation may be implemented by using one function entity, one chip, or the like, for example, one service operation entity.

302a/302b: The NMS sends a feasibility check and reservation job creation request to each EMS, and the EMS receives the request.

The NMS may obtain a slice configuration of each domain through decomposition based on the slice configuration. The slice configuration may indicate a requirement, on network performance, needed by a network slice subnet corresponding to a single domain. After the NMS obtains the slice configuration of each domain through decomposition, the NMS may send the feasibility check and reservation job creation request to the EMS corresponding to each domain. For example, the feasibility check and reservation job creation request sent by the NMS to the EMS includes a slice configuration of a network domain managed by the EMS. For example, the request may further include at least one of the following: resource reservation or requested reservation expiration. The feasibility check and reservation job creation request in step 301 is different from the feasibility check and reservation job creation request in step 302a/302b. For example, the slice configuration included in the feasibility check and reservation job creation request shown in step 302a/302b is a slice configuration of a network slice subnet corresponding to a network domain managed by an EMS, and the slice configuration included in the feasibility check and reservation job creation request shown in step 301 is a slice configuration of the network slice.

Step 302a and step 302b show that the NMS sends a feasibility check and reservation job creation request to two EMSs. In specific implementation, a quantity of domains obtained by the NMS through decomposition may be one, or more than two, and the like. This is not shown herein one by one.

For the NMS, the EMS may be referred to as a network slice subnet (networkslicesubnet, NSS) management service provider (NSS MnS provider). For the EMS, the NMS may be referred to as a network slice subnet management service consumer (MSS MnS consumer).

It can be learned from the foregoing relationship between the service operation and the NMS and the foregoing relationship between the NMS and the EMS that an object that the service operation requests to create is the network slice, an object that the NMS requests to create may be the network slice subnet corresponding to each domain, and an object created by the EMS is the network slice subnet. When the NMS obtains at least two domains through decomposition based on the slice configuration, the network slice may include at least two network slice subnets. When the NMS obtains one domain through decomposition based on the slice configuration, the object created by the EMS may alternatively be a network slice (or may be the network slice subnet). Regardless of whether the object created by the EMS is the network slice or the network slice subnet, both of them are applicable to the method shown in this embodiment of this application.

303a/303b: The EMS sends a feasibility and reservation result to the NMS, and correspondingly, the NMS receives the feasibility and reservation result.

After receiving the request, the EMS may perform a single-domain slice feasibility check. If a check failure occurs, the feasibility check and reservation result may include recommended requirements (recommendedrequirements). The recommended requirements may indicate a slice configuration (for example, the slice configuration of the network slice subnet) that can be satisfied by a current network. "Current" shown in this embodiment of this application may be a period of time in which the EMS performs a feasibility check after receiving the request, for example, a period of time from receiving the request by the EMS to completing the feasibility check by the EMS.

For example, the feasibility and reservation result may include at least one of the following: a feasibility result (feasibilityresult), an infeasible reason (infeasiblereason), a resource reservation status (resourcereservationstatus), a resource failure reason (reservationfailurereason), reservation expiration (reservationexpiration), or the recommended requirements (recommendedrequirements). The feasibility result may indicate a feasibility check result, the infeasible reason may indicate a check failure reason, the resource reservation status may indicate whether a resource is reserved for the to-be-created network slice subnet, the resource failure reason may indicate a reason for not reserving the resource, the reservation expiration may indicate a period in which the EMS can reserve the resource when the resource is reserved, and the recommended requirements may indicate the slice configuration that can be satisfied by the current network.

304: The NMS reports a feasibility and reservation result to the service operation.

The feasibility and reservation result reported by the NMS to the service operation includes at least one of the following: the feasibility result, a feasible reason, the resource reservation status, the resource failure reason, the reservation expiration, or the recommended requirements. For example, the NMS may report, to the service operation, recommended requirements returned by the EMS corresponding to each domain. For related descriptions of the feasibility and reservation result, refer to step 303a/303b. Details are not described herein again.

In this embodiment of this application, the feasibility and reservation result sent by the EMS is for a feasibility and reservation result of the network slice subnet, and the feasibility and reservation result sent by the NMS is for a feasibility and reservation result of the network slice. For example, after receiving the feasibility and reservation result that is of the network slice subnet and that is returned by the EMS corresponding to each domain, the NMS may collect feasibility and reservation results of network slice subnets corresponding to all domains, and determine the feasibility and reservation result of the network slice. For example, the NMS analyzes the recommended requirements (recommendedrequirements) returned by the EMS corresponding to each domain. If it is found that an end-to-end slice configuration (for example, the slice configuration of the network slice) cannot be satisfied, the recommended requirements (recommendedRequirements) may be returned to the service operation based on a current network status. The recommended requirements may indicate that the current network cannot satisfy the requested slice configuration of the network slice, and may be used for recommending a slice configuration that can be satisfied by the current network and that has slightly lower network performance. After receiving the slice configuration that can be satisfied by the current network, the service operation finds that the slice configuration with the slightly lower network performance cannot satisfy a high requirement related to a scenario on network performance. In this case, the service operation may determine not to create the network slice (or determine that creation of the network slice fails).

In this embodiment of this application, whether the EMS, the NMS, or the like successfully reserves the resource is not limited. For related descriptions of the resource reservation, refer to a related standard. Details are not shown one by one in this embodiment of this application.

It can be learned from the method shown in FIG. 3 that when the current network cannot satisfy the requested slice configuration, for the scenario with the high requirement on network performance, the recommended requirements (recommendedrequirements) of the NMS cannot satisfy the requirement related to the scenario on the network performance. Therefore, the network slice cannot be successfully created, and a success rate of creating the network slice is low.

In view of this, embodiments of this application provide a communication method and a function entity, to effectively improve a success rate of creating a logical network. Especially for a scenario in which a requirement on network performance is high but a requirement on time is not strict, the method provided in embodiments of this application can effectively improve a success rate of creating a network slice (or a network slice subnet). In embodiments of this application, a strict requirement on time (or a high requirement on time) means that creation of the network slice (or the network slice subnet) needs to be performed within a time period or a needed time period cannot be changed, and a non-strict requirement on time (or a low requirement on time or a flexible requirement on time) means that a needed time period is flexible or a needed time period is not limited to a time period. Whether the requirement on time is strict or whether the requirement on time is high shown herein is relative. Similarly, whether a requirement on the network performance is high or low shown in embodiments of this application is also relative.

The following describes service requirements of different scenarios on the network slice.

Scenario A: The network slice has a flexible requirement on network performance, but has a high requirement on time, for example, has a high requirement on creation time of the network slice, or has a high requirement on time of using the network slice. For example, when a new end-to-end network application needs to be provisioned, a user expects to provision an end-to-end network slice (where a service corresponding to the network slice is the foregoing network application) at a moment, and the network slice has a high requirement on time, but network performance may be somewhat flexible. For example, when a celebration activity of a fixed festival is held, to satisfy a basic requirement, for example, a traffic requirement like a call requirement and a code scanning requirement, of an activity participant as much as possible, an end-to-end network slice generally needs to be formed immediately on the day of the festival.

Scenario B: The network slice has a high requirement on network performance, but has a flexible requirement on time, for example, has a flexible requirement on creation time of the network slice, or has a flexible requirement on time of using the network slice. When a new end-to-end network application is provisioned, a user expects to provision an end-to-end network slice, and the network slice has a low requirement on time, but has a high requirement on network performance. For example, to attract users, a vendor plans to hold a video live broadcast to promote a new product. The video live broadcast has high requirements on a network bandwidth and a user quantity. However, live broadcast time for new product promotion is flexible (where for example, the live broadcast time can be adjusted flexibly).

In the method shown in FIG. 3, whether the network slice or the network slice subnet can be successfully created is mainly determined by the network performance. If the current network cannot satisfy the slice configuration of the to-be-created network slice subnet, a check failure occurs when the EMS performs slice feasibility check, and requirements that can be satisfied by the current network and that are lower than the requested slice configuration (the recommended requirements shown in FIG. 3 such as the network performance) are returned. For the foregoing scenario B, even if the NMS or the service operation obtains the recommended requirements (for example, the network performance), because the network performance cannot satisfy the scenario requirement, the service operation chooses not to create the network slice, and consequently, the network slice cannot be created.

However, according to the method provided in this embodiment of this application, for the scenario B with the flexible requirement on time, the EMS returns the first time information, so that the NMS or the service operator can create, in a first time period indicated by the first time information, the network slice or the network slice subnet that satisfies the high requirement. In addition, the EMS returns a slice check response including the first time information, so that the NMS or the service operation can not only obtain recommended requirements (where network performance is lower than the requested network performance), but also obtain a time period that can satisfy the requirement. Therefore, the NMS or the service operation can have more choices, for example, may choose to immediately create the network slice or the network slice subnet, or may choose to create the network slice or the network slice subnet in the first time period, thereby improving service experience. Therefore, according to the method provided in this embodiment of this application, not only the success rate of creating the network slice or the network slice subnet can be effectively improved, but also the service experience can be improved.

FIG. 4a is a schematic flowchart of a communication method according to an embodiment of this application. A first function entity in the method may be an element management entity or a network management entity, and a second function entity in the method may be a network management entity or a service operation entity. The element management entity may be configured to implement steps or functions performed by an EMS, the network management entity may be configured to implement steps or functions performed by an NMS, and the service operation entity may be configured to perform steps or functions performed by a service operation. For example, the element management entity and the EMS may be interchangeable, the network management entity and the NMS may be interchangeable, and the service operation entity and the service operation may be interchangeable.

411: The second function entity sends request information to the first function entity, and correspondingly, the first function entity receives the request information. The request information may be used for requesting to check whether a requirement related to a to-be-created logical network can be satisfied.

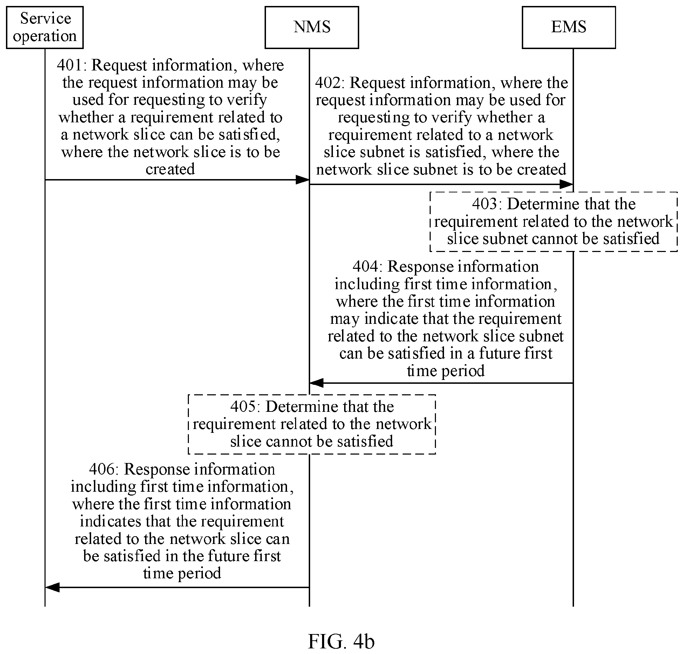

For related descriptions of step 411, refer to the following descriptions of request information in step 401 in FIG. 4b, or refer to the following descriptions of request information in step 402 in FIG. 4b. For example, for related descriptions in a case in which the first function entity is the EMS and the second function entity is the NMS, refer to the following step 402. For another example, for related descriptions in a case in which the first function entity is the NMS and the second function entity is the service operation, refer to the following step 401.

In a possible implementation, the method shown in FIG. 4a may further include step 412.

412: The first function entity determines that the requirement related to the logical network cannot be satisfied.

For specific descriptions of determining, by the EMS, that a requirement related to a network slice subnet cannot be satisfied, refer to the following descriptions of step 403 in FIG. 4b. For specific descriptions of determining, by the NMS, that a requirement related to a network slice cannot be satisfied, refer to the following descriptions of step 405 in FIG. 4b.

413: The first function entity sends response information including first time information to the second function entity, and correspondingly, the second function entity receives the response information. The first time information may indicate that the requirement related to the logical network can be satisfied in a future first time period.

For related descriptions of step 413, refer to the following descriptions of response information in step 404 in FIG. 4b, or refer to the following descriptions of response information in step 406 in FIG. 4b. For example, for related descriptions in a case in which the first function entity is the EMS and the second function entity is the NMS, refer to the following step 404. For another example, for related descriptions in a case in which the first function entity is the NMS and the second function entity is the service operation, refer to the following step 406.

FIG. 4b is a schematic flowchart of a communication method according to an embodiment of this application. For related descriptions of an EMS and an NMS, refer to descriptions in FIG. 2. Details are not described herein again. For example, functions or steps performed by the EMS may alternatively be implemented by an element management entity, functions or steps performed by the NMS may alternatively be implemented by a network management entity, functions or steps implemented by a service operation may alternatively be implemented by a service operation entity, or the like. Details are not described herein. As shown in FIG. 4b, the method includes the following steps.

401: The service operation sends request information, and correspondingly, the NMS receives the request information. The request information may be used for requesting to check whether a requirement related to a to-be-created network slice can be satisfied.

The request information may also be referred to as a slice verification request, a slice check request, or the like. A specific name of the request information is not limited in this embodiment of this application. The slice check request is used as an example for description in specific examples in the following, but should not be construed as a limitation on embodiments of this application.

For example, the NMS may receive the slice check request from the service operation, where the slice check request may include the requirement related to the network slice. The requirement related to the network slice may include a slice configuration of the network slice, and the requirement related to the network slice may further include at least one of the following: resource reservation or requested reservation expiration. The slice configuration of the network slice may indicate a requirement, on network performance, that needs to be satisfied by an end-to-end network slice.

After receiving the slice check request, the NMS may obtain, through decomposition based on the slice configuration of the network slice, a slice configuration of a network slice subnet corresponding to each domain. The slice configuration of the network slice subnet may indicate a requirement, on network performance, that needs to be satisfied by a to-be-created network slice subnet in a domain. The NMS may obtain one domain, two domains, or the like through decomposition based on the slice configuration. A quantity of domains obtained through decomposition by the NMS is not limited in this embodiment of this application. For example, when the NMS obtains one domain through decomposition, the slice check request may alternatively be used for requesting to check whether the requirement related to the to-be-created network slice is satisfied. Any quantity of domains obtained through decomposition by the NMS is applicable to the communication method provided in this embodiment of this application. For related descriptions of the network slice and the network slice subnet, refer to descriptions of step 302a/302b in FIG. 3. Details are not described herein again.

The domain obtained through decomposition may include at least one of a CN domain or a RAN domain. For example, the CN domain and the RAN domain are used as an example. The NMS may obtain, through decomposition based on the slice configuration of the network slice, a requirement related to a to-be-created network slice subnet in the CN domain (or referred to as CN slice subnet requirements (CN slicesubnetrequirements)), and send, to an EMS corresponding to the CN domain, a slice check request corresponding to the CN domain. In addition, the NMS may further obtain, through decomposition based on the slice configuration, a to-be-created network slice subnet in the RAN domain (or referred to as RAN slice subnet requirements (RAN slicesubnetrequirements)), and send, to an EMS corresponding to the RAN domain, a slice check request corresponding to the RAN domain. For another example, an aggregated CN and RAN domain is used as an example. The NMS may obtain, through decomposition based on the slice configuration of the network slice, requirements (for example, topnetworkslicesubnetprofile) of a network slice subnet corresponding to the aggregated CN and RAN domain, and separately send the requirement to the CN domain and the RAN domain. For ease of brevity, the requirement related to the CN slice subnet and the requirement related to the RAN slice subnet are used as examples for description in specific examples below.

For example, a slice configuration of the CN slice subnet may include at least one of the following: a maximum quantity of access devices of the CN slice subnet, an uplink latency of the CN slice subnet, a downlink latency of the CN slice subnet, an uplink rate of the CN slice subnet, or a downlink rate of the CN slice subnet. A slice configuration of the RAN slice subnet may include at least one of the following: a maximum quantity of access devices of the RAN slice subnet, an uplink latency of the RAN slice subnet, a downlink latency of the RAN slice subnet, an uplink rate of the RAN slice subnet, or a downlink rate of the RAN slice subnet. For example, the slice configuration of the CN slice subnet may further include at least one of the following: N6 protection (N6protection) or network slice-specific authentication and authorization (network slice-specific authentication and authorization, NSSAA) support (NSSAA support). The slice configuration of the RAN slice subnet may further include at least one of the following: positioning (positioning) or new radio (newradio, NR) operating bands (NR operatingbands). Specific content of the slice configuration of the CN slice subnet and the slice configuration of the RAN slice subnet is not listed herein one by one.

402: The NMS sends request information, and correspondingly, the EMS receives the request information. The request information may be used for requesting to check whether a requirement related to a to-be-created network slice subnet is satisfied.

The request information may be used for requesting to check (or verify) whether a requirement related to a network slice subnet can be satisfied. For example, the request information may include the requirement related to the network slice subnet. The requirement related to the network slice subnet may include a slice configuration of the network slice subnet. For example, the request information may be used for requesting to check (or verify) whether the slice configuration of the to-be-created network slice subnet can be satisfied. For example, the requirement may further include at least one of the following: resource reservation or requested reservation expiration. The request information may include a feasibility check and reservation job creation request. For related descriptions of the feasibility check and reservation job creation request, refer to FIG. 3. Details are not described herein again.

For a difference between the slice configuration in the slice check request received by the NMS and the slice configuration in the slice check request sent by the NMS, refer to descriptions of steps 302a and 302b in FIG. 3. Details are not described herein again.

In a possible implementation, the slice check request may further include second time information, and the second time information indicates an expected second time period. The expected second time period indicates a time period that is expected by a second function entity (for example, the NMS or the service operation) and in which an end-to-end network slice (or network slice subnet) is to be created, indicates a time period that a second function entity expects and in which an end-to-end network slice (or network slice subnet) can be provisioned, or indicates a time period that the second function entity expects and that the first function entity can return. The slice check request shown herein is applicable to the request information in step 401, and is also applicable to the request information in step 402. For example, the request information in step 401 may further include the second time information, and in this case, the request information in step 402 may further include the second time information. For another example, the request information in step 401 does not include the second time information, and the request information in step 402 may include the second time information.

For example, a first time period indicated by first time information in the following step 404 may overlap the second time period. For example, the first time period may be a subset of the second time period. For another example, there may be an intersection set between the first time period and the second time period.

In an example, when there is no intersection set between a time period predicted by the EMS and the second time period, the EMS may not return the time period predicted by the EMS, for example, return recommended requirements based on a current network status. The recommended requirements may indicate that a current network cannot satisfy a requested slice configuration, and may be used for recommending a slice configuration that can be satisfied by the current network and that has network performance lower than that of the requested slice configuration. In another example, when there is no intersection set between a time period predicted by the EMS and the second time period, the EMS may still return the time period predicted by the EMS, and another function entity (for example, the service operation or the NMS) determines whether to create the end-to-end network slice in the time period that is predicted by the EMS and that has no intersection set with the second time period. Alternatively, the EMS may include a plurality of first time periods and a confidence corresponding to each first time period in a slice check response. Therefore, the another function entity may determine, with reference to the confidence and the expected second time period, whether to create the end-to-end network slice or network slice subnet.

For example, when determining the first time information by using an NDT model, the EMS may consider required expected time (for example, the second time period). For example, an input of the NDT model may include the second time information. The second time information is input into the NDT model, so that it can be ensured that a first time period that is output in the NDT model is within the expected time period (where for example, the first time period is a subset of the second time period). Alternatively, after the EMS outputs the predicted time period by using the NDT model, the EMS may obtain an intersection set of the predicted time period and the second time period, where the intersection set may be the first time period. A method for determining, by the EMS, the first time period with reference to the second time period is not limited in this embodiment of this application.

In this embodiment of this application, the expected second time period is added to the slice check request, so that the first function entity can effectively learn of a time period expected by the second function entity, thereby improving information exchange efficiency.

In a possible implementation, the slice check request may further include request indication information. The request indication information is used for requesting to include the first time information in the slice check response, or the request indication information may be used for requesting to return time information (for example, the first time information). For example, attribute return time information may be added to the slice check request. The attribute return time information may indicate that a future time period in which a slice configuration (for example, a requirement related to a to-be-created network slice on network performance) that can satisfy the to-be-created network slice needs to be returned when a check failure occurs, or the attribute return time information may indicate that a future time period in which a slice configuration (for example, a requirement related to a to-be-created network slice subnet on network performance) that can satisfy the to-be-created network slice subnet needs to be returned when a check failure occurs. The request indication information shown herein is applicable to the request information in step 401, and is also applicable to the request information in step 402. For example, the request information in step 401 may further include the request indication information, and in this case, the request information in step 402 may further include the request indication information. For another example, the request information in step 401 does not include the request indication information, and the request information in step 402 may include the request indication information.

In this embodiment of this application, the request indication information is added to the slice check request, so that a function entity, for example, the EMS, that receives the slice check request can effectively learn that the function entity needs to predict a future time period in which a slice configuration of the to-be-created network slice subnet or network slice can be satisfied. Therefore, for a scenario in which flexible time and high network performance are required, the EMS may predict the future time period based on the request indication information, and increase a success rate of creating the network slice or network slice subnet without reducing the requirement related to the to-be-created network slice on network performance.

In a possible implementation, the method shown in FIG. 4b may further include step 403.

403: The EMS determines that the requirement related to the network slice subnet cannot be satisfied.

That the requirement related to the network slice subnet cannot be satisfied means that the requirement (for example, the slice configuration) of the network slice subnet are not satisfied within a period of time from receiving the slice check request by the EMS to completing a feasibility check by the EMS. In other words, in a current time period, the requirement related to the network slice subnet cannot be satisfied. For related descriptions of "current", refer to FIG. 3. Details are not described herein again.

For example, the EMS may determine, based on requirements in the request information and current network performance of a network domain managed by the EMS, whether the current network performance of the EMS can satisfy the foregoing requirements. For example, the EMS may check the slice configuration of the to-be-created network slice subnet, for example, check whether the current network performance of the network domain managed by the EMS can satisfy the slice configuration. If the current network performance of the network domain managed by the EMS cannot satisfy the slice configuration, it indicates that the requirement cannot be satisfied.

404: The EMS sends the response information including the first time information, and correspondingly, the NMS receives the response information. The first time information may indicate that the requirement related to the network slice subnet can be satisfied in the future first time period.

For example, the EMS may send the response information in response to that the requirement related to the network slice subnet cannot be satisfied. The first time information may indicate the first time period, and a requirement related to an end-to-end network slice subnet created in the first time period is not reduced. For example, the requirement related to the end-to-end network slice subnet created in the first time period is consistent with the requirement requested in step 402. Alternatively, the first time information indicates a predicted future time period in which the requested requirements can be satisfied in the future. There may be one or more first time periods indicated by the first time information. This is not limited in this embodiment of this application.

The following describes a form of the first time period indicated by the first time information.

For example, the first time information may include information about a start time point of the first time period, and information about an end time point of the first time period. Alternatively, the first time information may include information about a start time point of the first time period, and information about duration of the first time period. In other words, the first time information may include information about a feasible time range, and the feasible time range is a predicted feasible time interval. The first time information may indicate that an interval from a start moment to an end moment is feasible time.

For another example, the first time information may include information about a start time point and information about an end time point. An interval from the start time point to the end time point is infeasible time, and all time other than the infeasible time is the first time period.

For example, the response information may further include at least one of the following: a feasibility result (feasibilityresult), an infeasible reason (infeasiblereason), a resource reservation status (resourcereservationstatus), a resource failure reason (reservationfailurereason), reservation expiration (reservationexpiration), or recommended requirements (recommendedrequirements). For related descriptions of the response information, refer to descriptions of the feasibility and reservation result in FIG. 3. Details are not described herein again. The response information may also be referred to as a slice verification response, a slice check response, or the like. A specific name of the response information is not limited in this embodiment of this application. The slice check response is used as an example for description in specific examples in the following, but should not be construed as a limitation on embodiments of this application.

In a possible implementation, the slice check response may further include confidence information, and the confidence information indicates a probability that the requirement related to the network slice subnet is satisfied in the first time period. Alternatively, the confidence information may indicate a confidence of the predicted first time information. Alternatively, the confidence information may indicate reliability of the first time period. For example, the confidence may be determined based on weak convergence of the central limit theorem and the standard normal distribution. A specific confidence calculation method is not limited in this embodiment of this application.

In this embodiment of this application, the EMS includes the confidence information in the slice check response, so that the another function entity (for example, the NMS or the service operation) can select the first time period with reference to the confidence, thereby further improving the success rate of creating the end-to-end network slice.

For example, the EMS may determine the first time information by using the network digital twin (network digital twin, NDT) model. An input of the NDT model includes the network performance of the network domain managed by the EMS, the slice configuration included in the slice check request, and current time, and an output of the NDT model includes the first time information. For example, the input of the NDT model may further include the second time information. The network performance of the network domain managed by the EMS may include at least one of the following: a maximum quantity of devices that currently access a network, a network latency, or a network bandwidth. The foregoing NDT may be considered as a virtual representation of a physical network, and the physical network may be analyzed and diagnosed by using data, a model, and an interface. For example, the NDT may be a network system that has a physical network entity and a virtual twin, where the physical network entity and the virtual twin can perform real-time interactive mapping. In this system, various network management and applications can use a digital twin technology to construct network virtual twins, and efficiently analyze, diagnose, simulate, and control physical networks based on data and models.

For example, the EMS may determine a future change status of a network resource by using the NDT model. Alternatively, the EMS may predict a network resource that is in the future time by using a historical network resource data and a recurrent neural network. Alternatively, the EMS may predict a future network resource by using a network topology, a network resource, and a convolutional neural network. The predicted future network resource may be used for determining the first time information. For example, the EMS may determine the first time information based on the current network performance and a predicted fluctuation status of the future network resource. For another example, when there are an excessively large quantity of devices currently accessing the network, network resources are insufficient. Therefore, a maximum quantity of devices that can be accommodated by the to-be-created network slice is reduced, and an uplink speed and a downlink speed of the to-be-created network slice are also reduced. For another example, the current network may fluctuate due to factors such as load and congestion, causing an unstable network latency and affecting a network latency of the to-be-created network slice. Therefore, the EMS may determine, with reference to the current network performance and the fluctuation status of the network resource, the first time period that can satisfy the requirement (for example, the slice configuration). A specific manner in which the EMS determines the first time information is not limited in this embodiment of this application.

In a possible implementation, the method shown in FIG. 4b may further include step 405.

405: The NMS determines that the requirement related to the network slice cannot be satisfied.

For example, after receiving a slice check response sent by an EMS corresponding to each domain, the NMS may collect first time periods corresponding to all domains. In an example, the NMS may determine an intersection set of the first time periods corresponding to all the domains. A time period indicated by the intersection set may satisfy a requirement related to a to-be-created network slice subnet in each domain. In another example, the NMS may report the collected first time periods corresponding to all the domains to the service operation.

A difference between step 403 and step 405 may include but is not limited to the following: An object determined by the EMS in step 403 is the network slice subnet, and an object determined by the NMS in step 405 is the network slice; and in step 403, the EMS may determine, with reference to the slice configuration of the network slice subnet and the current network performance of the network domain managed by the EMS, whether the requirement related to the network slice subnet can be satisfied, but in step 405, the NMS determines, with reference to the slice check response reported by the EMS corresponding to each domain, whether the requirement related to the network slice can be satisfied. Differences between step 403 and step 405 are not listed herein one by one.

406: The NMS sends the response information including the first time information to the service operation, and correspondingly, the service operation receives the response information. The first time information indicates that the requirement related to the network slice can be satisfied in the future first time period.

The first time information in step 406 may be a set of the first time periods corresponding to all the domains, or the first time information may be an intersection set of the first time periods corresponding to all the domains. For other descriptions of the response information in step 406, refer to descriptions in step 404. A difference between the two pieces of response information lies in that the recommended requirements in the response information in step 404 are requirements that correspond to the network slice subnet and that are recommended by the EMS, and recommended requirements in the response information in step 406 may be recommended requirements reported by all EMSs. For example, the response information in step 406 may also include confidence information.

For example, when the slice check response received by the NMS includes the confidence information, after receiving the slice check response sent by the EMS corresponding to each domain, the NMS may report, to the service operation, a confidence corresponding to each domain, may report, to the service operation, a minimum value of confidences corresponding to all the domains, or may report, to the service operation, an average value of confidences corresponding to all the domains. A specific form of the confidence in the slice check response reported by the NMS is not limited in this embodiment of this application.

After receiving the slice check response, the service operation may obtain the intersection set of the first time periods corresponding to all the domains, or the first time period corresponding to each domain. For example, in the first time period, a related entity (for example, the service operation, the NMS, or the EMS) may create a network slice or a network slice subnet that satisfies the requirement. For example, the service operation may send a slice check request again to the NMS in the time period indicated by the intersection set, to help check whether an end-to-end network slice can be created in the time period again. After receiving the slice check request, the NMS obtains a slice configuration corresponding to each domain through decomposition, and sends the slice check request to the EMS corresponding to each domain. After receiving the slice check request, the EMS may perform a feasibility check with reference to the current network performance and the slice configuration of the to-be-created network slice subnet. Because a probability that the slice configuration of the network slice subnet can be satisfied in the first time period is high, a success rate of the feasibility check is high. Therefore, the EMS may return a slice check response. Alternatively, after a feasibility check failure occurs, the EMS may return a future time period predicted by the EMS again.

For other descriptions of the communication method shown in FIG. 4b, refer to FIG. 3. Details are not described herein again.

In this embodiment of this application, when the requirement (for example, the slice configuration) of the to-be-created logical network cannot be satisfied, the first function entity sends the response information including the first time information. After receiving the response information, the second function entity can effectively learn when the requirement related to the network slice subnet can be satisfied. Therefore, the second function entity may create the network slice (or the network slice subnet) in the first time period, to improve the success rate of creating the network slice (or the network slice subnet). Especially for the scenario in which the flexible time and the high network performance are required, the first time information is sent, so that the second function entity creates, in the first time period indicated by the first time information, a network slice (or a network slice subnet) that satisfies a high requirement. This not only effectively improves the success rate of creating the network slice (or the network slice subnet), but also effectively improves service experience.

The following describes the communication methods shown in FIG. 4a and FIG. 4b with reference to specific embodiments.

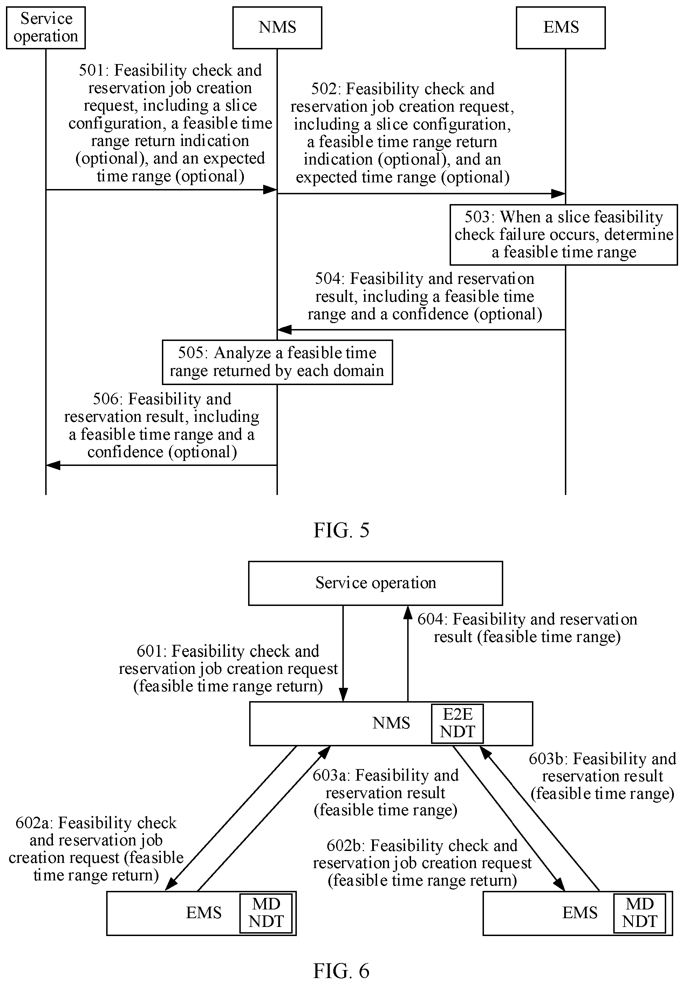

FIG. 5 is a schematic flowchart of a communication method according to an embodiment of this application. As shown in FIG. 5, the method includes the following steps.

501: A service operation sends a feasibility check and reservation job creation request, and correspondingly, an NMS receives the feasibility check and reservation job creation request.

The feasibility check and reservation job creation request may include a slice configuration. For related content of the foregoing request, refer to descriptions of step 401 in FIG. 4b or step 301 in FIG. 3. Details are not described herein again.

For example, an attribute of a feasible time range return indication may be added to the feasibility check and reservation job creation request. The attribute of the feasible time range return indication may indicate, when a check failure occurs, to return a future time period that can satisfy a requirement on network performance. The requirement on network performance shown herein is a requirement related to a to-be-created network slice, for example, the slice configuration. For related descriptions of the feasible time range return indication, refer to descriptions of the request indication information in FIG. 4b. Details are not described herein again.

For example, the feasibility check and reservation job creation request may include expected time information. The expected time information may indicate an expected time range. When predicting a feasible time range, an NDT model may output the feasible time range within the expected time range with reference to the expected time range. For descriptions of the expected time information, refer to descriptions of the second time information in FIG. 4b. Details are not described herein again. The expected time range is added to the feasibility check and reservation job creation request, so that when an EMS returns a feasibility and reservation result, the feasible time range indicated by the feasibility and reservation result is within the expected time period, thereby improving service experience.

For related descriptions of other content included in the feasibility check and reservation job creation request, refer to descriptions of step 301 in FIG. 3, or refer to descriptions of step 401 in FIG. 4b. Details are not described herein again.

502: The NMS sends a feasibility check and reservation job creation request to the EMS, and correspondingly, the EMS receives the feasibility check and reservation job creation request.

The feasibility check and reservation job creation request may include a slice configuration. For example, an attribute of a feasible time range return indication (which may also be referred to as a return feasible time range) may be added to the foregoing request, or the foregoing request requires return of a feasible time range indication. The slice configuration in the feasibility check and reservation job creation request sent by the NMS to the EMS is a slice configuration of a to-be-created network slice subnet in a network domain managed by the EMS, and the slice configuration in the feasibility check and reservation job creation request sent by the service operation to the NMS is a slice configuration of an end-to-end network slice. For other descriptions of the request in step 502, refer to step 501. Details are not described herein again.

503: When slice feasibility check failure occurs, the EMS determines a feasible time range.

The slice feasibility check failure indicates that a requirement related to the to-be-created network slice subnet cannot be satisfied. For related descriptions of the feasible time range, refer to descriptions of the first time information in FIG. 4b. For example, when the slice feasibility check failure occurs, an EMS corresponding to each domain may predict, by using a function model in an NDT, first time information based on historical data stored in the NDT model, real-time data received by the NDT model, and data generated by the model. For example, the NDT model may also predict a fluctuation of future network traffic and a network resource, and the fluctuation of the future network traffic and the network resource may be used for accurately determining a feasible time range in which network resources are abundant and the requirement related to the network slice subnet is satisfied. The historical data may be historical time stored in the NDT model and a requirement on network performance within the historical time. The received real-time data may be a slice configuration included in a slice check request. The data generated by the model may be data generated by the NDT model based on the historical data.

For example, step 503 may include determining that the requirement cannot be satisfied and determining the feasible time range. A sequence of performing a feasibility check and determining the feasible time range by the EMS is not limited in this embodiment of this application. For example, the EMS may first perform the feasibility check, and determine the feasible time range after the feasibility check failure occurs. For another example, the EMS may determine the feasible time range and perform the feasibility check at the same time.

For related descriptions of the feasible time range, refer to the foregoing descriptions of the first time information. Details are not described herein again.

504: The EMS sends the feasibility and reservation result to the NMS, and correspondingly, the NMS receives the feasibility and reservation result.

An attribute of the feasible time range can be added to the feasibility and reservation result. For example, an attribute of a prediction confidence can be added to the feasibility and reservation result. The prediction confidence may indicate a confidence of the predicted feasible time range, or the prediction confidence may indicate reliability of the feasible time range. For related descriptions of the feasibility and reservation result, refer to descriptions of the slice check response including the first time information in FIG. 4b. Details are not described herein again.

505: The NMS analyzes a feasible time range returned by each domain.

For example, after receiving a feasibility and reservation result of each domain, the NMS may collect feasible time of all domains. For example, the NMS may determine an intersection set of the feasible time of all the domains, or report the collected feasible time of all the domains.

506: The NMS sends a feasibility and reservation result to the service operation, and correspondingly, the service operation receives the feasibility and reservation result.

An attribute of the feasible time range can be added to the feasibility and reservation result. For related descriptions of the feasibility and reservation result, refer to step 504, FIG. 4b, FIG. 3, or the like. Details are not described herein again. For related descriptions of the feasibility and reservation result in step 504, refer to descriptions of step 303a/303b in FIG. 3, refer to step 404, or the like. For another example, for related descriptions of the feasibility and reservation result in step 506, refer to descriptions of step 304 in FIG. 3, refer to step 406, or the like. Differences between the feasibility and reservation result in step 504 and the feasibility and reservation result in step 506 are not described in detail herein one by one.

In this embodiment of this application, the attribute of the feasible time range return indication (for example, the request indication information shown in FIG. 4b) is added to the feasibility check and reservation job creation request. The attribute may indicate, after the slice check failure occurs, to return the future time period that can satisfy the requirement on network performance. The attribute of the feasible time range (for example, the first time information shown in FIG. 4b) is added to the feasibility and reservation result, and the attribute may indicate to recommend a feasible time range when the requirement on network performance remains unchanged. Therefore, for a scenario in which a requirement on time is flexible but a requirement on network performance is high, a second function entity may adjust service time based on the recommended feasible time range, to ensure that the requirement on network performance is not reduced, and improve a success rate of creating the slice.

In this embodiment of this application, when the service operation and the NMS deliver the feasibility check and reservation job creation request, the attribute of feasible time range return is added. When the EMS and the NMS report the feasibility and reservation result, the attribute of the feasible time range is added, or the feasible time range and the prediction confidence are added. Therefore, it can be effectively ensured that the feasible time range in which the end-to-end network slice can be successfully created can be predicted without lowering the requirement on network performance, thereby improving the success rate of creating the network slice.

FIG. 6 is a diagram of a network slice feasibility check method according to an embodiment of this application. As shown in FIG. 6, the method includes the following steps.

601: A service operation sends a feasibility check and reservation job creation request to an NMS, and correspondingly, the NMS receives the feasibility check and reservation job creation request. The feasibility check and reservation job creation request may include at least one of the following attributes (attributes): a slice configuration, a feasible time range return indication, or an expected time range. For example, the request may further include at least one of the following attributes: resource reservation or requested reservation expiration.

For related descriptions of step 601, refer to step 301 in FIG. 3, step 401 in FIG. 4b, or step 501 in FIG. 5. Details are not described herein again.

602a/602b: The NMS sends a feasibility check and reservation job creation request to each EMS, and the EMS receives the request.

For example, after receiving the request, the NMS may obtain, through decomposition, a slice configuration of each domain based on the slice configuration in the request, and the NMS delivers the feasibility check and reservation job creation request to each EMS to perform a feasibility check.

The feasibility check and reservation job creation request may include at least one of the following attributes: a slice configuration of a network domain corresponding to the EMS, a feasible time range return indication, or an expected time range. For example, the request may further include at least one of the following attributes: resource reservation or requested reservation expiration.

For related descriptions of the feasibility check and resource reservation job creation request in step 601 and step 602a/602b, refer to descriptions in FIG. 3 or FIG. 4b. Details are not described herein one by one again.

603a/603b: The EMS sends a feasibility and reservation result to the NMS, and correspondingly, the NMS receives the feasibility and reservation result.

The feasibility and reservation result includes a feasible time range. For related descriptions of step 603a/603b, refer to the foregoing embodiments, as shown in FIG. 3, FIG. 4b, or the like. Details are not described herein again. For a specific manner of predicting the feasible time range by the EMS, refer to the foregoing embodiments. Details are not described herein again. For example, after receiving the foregoing request, the EMS may predict the feasible time range by using a management domain (management domain, MD) NDT. For example, the NMS may process, by using an end-to-end (end-to-end, E2E) NDT, a feasible time range returned by each domain, for example, determine an intersection set of feasible time ranges returned by all domains.

604: The NMS reports a feasibility and reservation result to the service operation.

For related descriptions of step 604, refer to the foregoing embodiments, as shown in FIG. 3, FIG. 4b, or the like. Details are not described herein again.

In this embodiment of this application, the feasible time range return indication is added to the feasibility check and reservation job creation request, so that after a slice check work failure occurs, the EMS may determine the feasible time range by using a prediction capability of the NDT. After determining the feasible time range, the EMS may send, to the NMS, a time range that can satisfy a requirement on single-domain network performance. After obtaining the feasible time range of each domain, the NMS may send the feasible time range to the service operation. After obtaining the feasible time range, the service operation may create a network slice within the feasible time range (for example, perform any method shown in FIG. 4a to FIG. 6 again), and create the network slice within the feasible time range. This can ensure a success rate of creating the network slice, thereby improving the success rate of creating the network slice.

In embodiments of this application, for a part that is not described in detail in one embodiment, refer to another embodiment.

The following describes function entities provided in embodiments of this application.

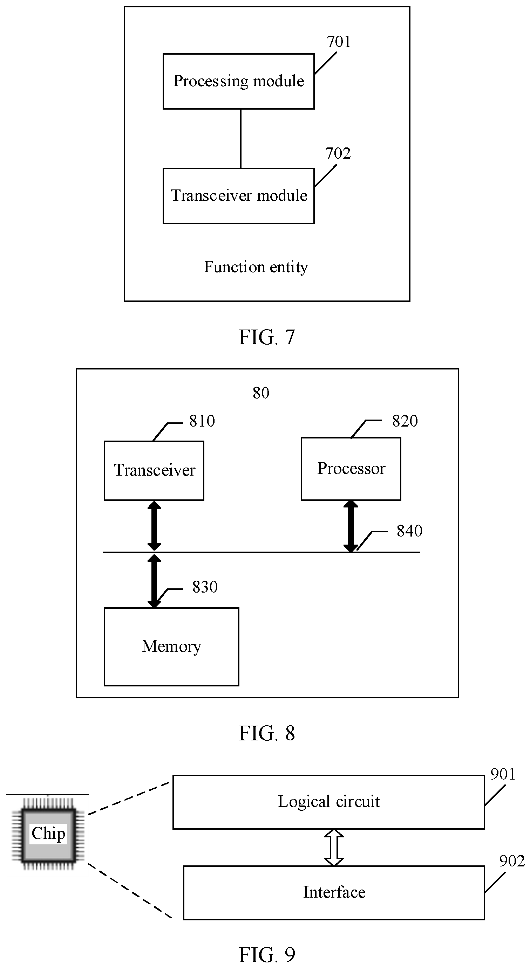

In this application, the function entity is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail the function entities in embodiments of this application with reference to FIG. 7 to FIG. 9.

FIG. 7 is a diagram of a structure of a function entity according to an embodiment of this application. As shown in FIG. 7, the function entity includes a processing module 701 and a transceiver module 702. The transceiver module 702 may implement a corresponding communication function, and the processing module 701 is configured to perform data processing. For example, the transceiver module 702 may also be referred to as an interface, a communication interface, a communication module, or the like.

In some embodiments of this application, the function entity may be configured to perform an action performed by the element management entity or the EMS in the foregoing method embodiments. In this case, the function entity may be the EMS, a functional module that can be configured in the EMS, or the like. The transceiver module 702 is configured to perform a receiving and sending-related operation of the element management entity or the EMS in the foregoing method embodiments. The processing module 701 is configured to perform a processing-related operation of the element management entity or the EMS in the foregoing method embodiments.

The transceiver module 702 is configured to receive or input a slice check request, where the slice check request is used for requesting to check whether a requirement related to a to-be-created network slice subnet is satisfied.

The transceiver module 702 is further configured to send or output a slice check response including first time information, where the first time information indicates that the requirement related to the to-be-created network slice subnet can be satisfied in a future first time period.

For example, the processing module 701 is configured to determine whether a requirement related to a to-be-created network slice subnet can be satisfied. For example, the processing module 701 may be configured to check the requirement related to the to-be-created network slice subnet, for example, may be configured to check whether current network performance of a network domain managed by the EMS can satisfy a slice configuration of the to-be-created network slice subnet.

For example, the processing module 701 is further configured to determine the first time information by using an NDT model, where an input of the NDT model includes network performance of the network domain managed by the element management system EMS, the slice configuration in the requirement, and current time, and an output of the NDT model includes the first time information.

FIG. 7 is reused. In some other embodiments of this application, the function entity may be configured to perform an action performed by the network management entity or the NMS in the foregoing method embodiments. In this case, the function entity may be the NMS, a functional module that can be configured in the NMS, or the like. The transceiver module 702 is configured to perform a receiving and sending-related operation of the network management entity or the NMS in the foregoing method embodiments. The processing module 701 is configured to perform a processing-related operation of the network management entity or the NMS in the foregoing method embodiments.

The transceiver module 702 may be configured to receive or input a slice check request from a service operation, where the slice check request may be used for requesting to check whether a requirement related to a to-be-created network slice is satisfied.

The transceiver module 702 may be further configured to send or output a slice check request to an EMS, where the slice check request may be used for requesting to check whether a requirement related to a to-be-created network slice subnet is satisfied.

The transceiver module 702 may be further configured to receive or input a slice check response from the EMS, where the slice check response includes first time information.

The transceiver module 702 may be further configured to send or output a slice check response to the service operation, where the slice check response includes the first time information.

For example, the processing module 701 may be configured to determine at least one of a requirement related to a network slice subnet corresponding to a RAN domain or a requirement related to a network slice subnet corresponding to a CN domain.

For example, the processing module 701 may be further configured to determine, based on a slice check response reported by an EMS corresponding to each domain, that the requirement related to the network slice cannot be satisfied.

For example, the processing module 701 may be configured to collect first time periods corresponding to all domains.

For example, the processing module 701 may be configured to process a confidence corresponding to each domain.

FIG. 7 is reused. In still some embodiments of this application, the function entity may be configured to perform an action performed by the service operation entity or the service operation in the foregoing method embodiments. In this case, the function entity may be a service operation server, a functional module that can be configured in the service operation server, or the like. The transceiver module 702 is configured to perform a receiving and sending-related operation of the service operation entity or the service operation in the foregoing method embodiments. The processing module 701 is configured to perform a processing-related operation of the service operation entity or service operation processing in the foregoing method embodiments.

The transceiver module 702 is configured to send or output a slice check request, where the slice check request is used for requesting to check whether a requirement related to a to-be-created network slice is satisfied.

The transceiver module 702 is further configured to receive or input a slice check response, where the slice check response includes first time information, and the first time information indicates a future first time period that can satisfy a requirement related to a to-be-created network slice.

Optionally, in the foregoing embodiments, the function entity may further include a storage module. The storage module may be configured to store instructions and/or data. The processing module 701 may read the instructions and/or the data in the storage module, so that the function entity implements the foregoing method embodiments.

In the foregoing embodiments, for specific descriptions and the like of terms or steps such as the slice check request, the slice check response, the first time information, the requirement, the slice configuration, the request indication information, and the confidence, refer to descriptions in the foregoing method embodiments. Details are not described herein one by one again.

Specific descriptions of the transceiver module and the processing module shown in embodiments are merely examples. For specific functions, steps, or the like performed by the transceiver module and the processing module, refer to the foregoing method embodiments. Details are not described herein again.

The foregoing describes the function entities in embodiments of this application. The following describes possible product forms of the function entities. A product that is in any form and that has a function of the function entity described in FIG. 7 falls within the protection scope of embodiments of this application. The following descriptions are merely examples, and do not limit the product form of the function entity in embodiments of this application.

In a possible implementation, in the function entity shown in FIG. 7, the processing module 701 may be one or more processors, and the transceiver module 702 may be a transceiver; or the transceiver module 702 may be a sending module and a receiving module, the sending module may be a transmitter, and the receiving module may be a receiver. The sending module and the receiving module are integrated into one component, for example, a transceiver. In this embodiment of this application, the processor and the transceiver may be coupled, or the like. A manner of connection between the processor and the transceiver is not limited in embodiments of this application. In a process of performing the foregoing method, a process of sending information in the foregoing method may be a process of outputting the foregoing information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information before the information is input into the processor.

As shown in FIG. 8, a function entity 80 includes one or more processors 820 and a transceiver 810.

In some embodiments of this application, the function entity may be configured to perform the steps, the methods, or the functions performed by the element management entity or the EMS. For example, the processor 820 may be configured to perform the functions or the steps implemented by the processing module 701 shown in FIG. 7, and the transceiver 810 may be configured to perform the functions or the steps implemented by the transceiver module 702 shown in FIG. 7. For specific descriptions of the processor 820 and the transceiver 810, refer to FIG. 7 or the foregoing method embodiments. Details are not described herein again.

In some other embodiments of this application, the function entity is configured to perform the steps, the methods, or the functions performed by the network management entity or the NMS. For example, the processor 820 may be configured to perform the functions or the steps implemented by the processing module 701 shown in FIG. 7, and the transceiver 810 may be configured to perform the functions or the steps implemented by the transceiver module 702 shown in FIG. 7. For specific descriptions of the processor 820 and the transceiver 810, refer to FIG. 7 or the foregoing method embodiments. Details are not described herein again.

In still some embodiments of this application, the function entity is configured to perform the steps, the methods, or the functions performed by the service operation entity or the service operation. For example, the processor 820 may be configured to perform the functions or the steps implemented by the processing module 701 shown in FIG. 7, and the transceiver 810 may be configured to perform the functions or the steps implemented by the transceiver module 702 shown in FIG. 7. For specific descriptions of the processor 820 and the transceiver 810, refer to FIG. 7 or the foregoing method embodiments. Details are not described herein again.

In each implementation of the function entity shown in FIG. 8, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the function entity 80 may further include one or more memories 830, configured to store program instructions and/or data. The memory 830 is coupled to the processor 820. The coupling in this embodiment of this application may be an indirect coupling or a communication connection between function entities, units, or modules in an electrical form, a mechanical form, or another form, and is used for information exchange between the function entities, the units, or the modules. The processor 820 may cooperate with the memory 830. The processor 820 may execute the program instructions stored in the memory 830. Optionally, at least one of the one or more memories may be included in the processor.

In this embodiment of this application, a specific connection medium between the transceiver 810, the processor 820, and the memory 830 is not limited. In this embodiment of this application, in FIG. 8, the memory 830, the processor 820, and the transceiver 810 are connected to each other through a bus 840. The bus is represented by using a thick line in FIG. 8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be configured to carry or store program code in a form of an instruction or a data structure and that can be read and/or written by a computer (for example, the function entity shown in this application), but is not limited thereto. The memory in embodiments of this application may alternatively be a circuit or any other apparatus that can implement a storage function, and is configured to store the program instructions and/or the data.

The processor 820 is mainly configured to: process a communication protocol and communication data, control the entire function entity, execute a software program, and process data of the software program. The memory 830 is mainly configured to store the software program and the data. The transceiver 810 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

After the function entity is powered on, the processor 820 may read the software program in the memory 830, interpret and execute instructions of the software program, and process the data of the software program. When data needs to be sent wirelessly, the processor 820 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave via the antenna. When data is sent to the function entity, the radio frequency circuit receives the radio frequency signal via the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed and independent of the function entity.

The function entity shown in this embodiment of this application may further have more components than those in FIG. 8, and the like. This is not limited in this embodiment of this application. The methods performed by the processor and the transceiver and shown above are merely examples. For specific steps performed by the processor and the transceiver, refer to the methods described above.

In another possible implementation, in the function entity shown in FIG. 7, the processing module 701 may be one or more logical circuits, and the transceiver module 702 may be an input/output interface that is also referred to as a communication interface, an interface circuit, an interface, or the like. Alternatively, the transceiver module 702 may be a sending module and a receiving module. The sending module may be an output interface, and the receiving module may be an input interface. The sending module and the receiving module are integrated into one module, for example, an input/output interface. As shown in FIG. 9, a function entity shown in FIG. 9 includes a logical circuit 901 and an interface 902. That is, the processing module 701 may be implemented by using the logical circuit 901, and the transceiver module 702 may be implemented by using the interface 902. The logical circuit 901 may be a chip, a processing circuit, an integrated circuit, a system on chip (system on chip, SoC), or the like. The interface 902 may be a communication interface, an input/output interface, a pin, or the like. For example, FIG. 9 shows an example in which the function entity is a chip, and the chip includes the logical circuit 901 and the interface 902.

In this embodiment of this application, the logical circuit and the interface may be coupled to each other. A specific manner of connection between the logical circuit and the interface is not limited in this embodiment of this application. For example, the logical circuit 901 may be configured to perform functions or steps implemented by the processing module 701 shown in FIG. 7, and the interface 902 may be configured to perform functions or steps implemented by the transceiver module 702 shown in FIG. 7. For specific descriptions of the logical circuit 901 and the interface 902, refer to FIG. 7 or the foregoing method embodiments. Details are not described herein again.

The function entity shown in this embodiment of this application may implement the method provided in embodiments of this application in a form of hardware, may implement the method provided in embodiments of this application in a form of software, or the like. This is not limited in embodiments of this application.

An embodiment of this application further provides a communication system. The communication system includes an element management entity and a network management entity. The element management entity and the network management entity may be configured to perform the method in any one of the foregoing embodiments.

An embodiment of this application further provides a communication system. The communication system includes a network management entity and a service operation entity. The network management entity and the service operation entity may be configured to perform the method in any one of the foregoing embodiments.

An embodiment of this application further provides a communication system. The communication system includes an element management entity, a network management entity, and a service operation entity. The element management entity, the network management entity, and the service operation entity may be configured to perform the method in any one of the foregoing embodiments.

In addition, this application further provides a computer program. The computer program is used for implementing operations and/or processing performed by the function entities in the methods provided in this application.

This application further provides a computer-readable storage medium. The computer-readable storage medium stores computer code. When the computer code is run on a computer, the computer is enabled to perform operations and/or processing performed by the function entities in the methods provided in this application.

This application further provides a computer program product. The computer program product includes computer code or a computer program. When the computer code or the computer program is run on a computer, an operation and/or processing performed by the function entities in the methods provided in this application are/is performed.

In several embodiments provided in this application, it should be understood that the disclosed system, function entity, and method may be implemented in other manners. For example, the described function entity embodiment is merely an example. For example, the foregoing module division is merely logical function division, and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the function entities or units, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of the software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first function entity, and the method comprises:
receiving request information, wherein the request information is used for requesting to check whether a requirement related to a logical network can be satisfied, wherein the logical network is to be created; and
in response to determining that the requirement cannot be satisfied, sending response information comprising first time information, wherein the first time information indicates a future first time period in which the requirement can be satisfied.

2. The method according to claim 1, wherein the request information further comprises second time information, and the second time information indicates an expected second time period.

3. The method according to claim 2, wherein the first time period is a subset of the second time period.

4. The method according to any one of claims 1 to 3, wherein the logical network is a network slice or a network slice subnet.

5. The method according to any one of claims 1 to 4, wherein the request information further comprises request indication information, and the request indication information is used for requesting to comprise the first time information in the response information.

6. The method according to any one of claims 1 to 5, wherein the first function entity is an element management entity.

7. The method according to any one of claims 1 to 6, wherein before sending the response information comprising the first time information, the method further comprises:
determining the first time information by using a network digital twin NDT model, wherein an input of the NDT model comprises network performance of a network domain managed by the first function entity, a slice configuration in the requirement, and current time, and an output of the NDT model comprises the first time information.

8. The method according to any one of claims 1 to 7, wherein the logical network is a network slice subnet, a requirement related to the network slice subnet comprises a slice configuration of the network slice subnet, and the slice configuration of the network slice subnet comprises at least one of the following:
a maximum quantity of access devices of the to-be-created network slice subnet;
an uplink latency of the to-be-created network slice subnet;
a downlink latency of the to-be-created network slice subnet;
an uplink rate of the to-be-created network slice subnet; or
a downlink rate of the to-be-created network slice subnet.

9. The method according to any one of claims 1 to 5, wherein the first function entity is a network management entity.

10. The method according to any one of claims 1 to 5 and 9, wherein the logical network is a network slice, and after receiving the request information, the method further comprises:
determining, based on a slice configuration of the network slice in the requirement, a slice configuration of a network slice subnet corresponding to one or more element management entities; and
sending request information comprising the slice configuration of the network slice subnet to each of the one or more element management entities.

11. The method according to any one of claims 1 to 5, 9, and 10, wherein the logical network is a network slice, a requirement related to the network slice comprises the slice configuration of the network slice, and the slice configuration of the network slice comprises at least one of the following:
a maximum quantity of access devices of the to-be-created network slice;
an uplink latency of the to-be-created network slice;
a downlink latency of the to-be-created network slice;
an uplink rate of the to-be-created network slice; or
a downlink rate of the to-be-created network slice.

12. A communication method, wherein the method is applied to a second function entity, and the method comprises:
sending request information, wherein the request information is used for requesting to check whether a requirement related to a logical network can be satisfied, wherein the logical network is to be created; and
receiving response information, wherein the response information comprises first time information, and the first time information indicates that the requirement can be satisfied in a future first time period.

13. The method according to claim 12, wherein the request information further comprises second time information, and the second time information indicates an expected second time period.

14. The method according to claim 13, wherein the first time period is a subset of the second time period.

15. The method according to any one of claims 12 to 14, wherein the logical network is a network slice or a network slice subnet.

16. The method according to any one of claims 12 to 15, wherein the request information further comprises request indication information, and the request indication information is used for requesting to comprise the first time information in the response information.

17. The method according to any one of claims 12 to 16, wherein the second function entity is a service operation entity.

18. The method according to any one of claims 12 to 17, wherein the logical network is a network slice, and the method further comprises:
creating, in the first time period, the network slice that satisfies the requirement.

19. The method according to any one of claims 12 to 18, wherein the logical network is a network slice, a requirement related to the network slice comprises a slice configuration of the network slice, and the slice configuration of the network slice comprises at least one of the following:
a maximum quantity of access devices of the to-be-created network slice;
an uplink latency of the to-be-created network slice;
a downlink latency of the to-be-created network slice;
an uplink rate of the to-be-created network slice; or
a downlink rate of the to-be-created network slice.

20. The method according to any one of claims 12 to 16, wherein the second function entity is a network management entity.

21. The method according to any one of claims 12 to 16, and 20, wherein the logical network is a network slice subnet, a requirement related to the network slice subnet comprises a slice configuration of the network slice subnet, and before sending the request information, the method further comprises:
receiving, from a service operation entity, the request information that comprises a slice configuration of the network slice; and
determining, based on the slice configuration of the network slice, the slice configuration of the network slice subnet corresponding to one or more element management entities.

22. The method according to any one of claims 12 to 16, 20, and 21, wherein the logical network is a network slice subnet, a requirement related to the network slice subnet comprises a configuration of the network slice subnet, and the slice configuration of the network slice subnet comprises at least one of the following:
a maximum quantity of access devices of the to-be-created network slice subnet;
an uplink latency of the to-be-created network slice subnet;
a downlink latency of the to-be-created network slice subnet;
an uplink rate of the to-be-created network slice subnet; or
a downlink rate of the to-be-created network slice subnet.

23. A function entity, comprising a module configured to perform the method according to any one of claims 1 to 11, or comprising a module configured to perform the method according to any one of claims 12 to 22.

24. A function entity, comprising a processor, wherein the processor is configured to enable the function entity to perform the method according to any one of claims 1 to 11, or the processor is configured to enable the function entity to perform the method according to any one of claims 12 to 22.

25. The function entity according to claim 24, wherein the function entity further comprises a transceiver, and the transceiver is configured to receive information or send information.

26. A computer program product, wherein the computer program product comprises a computer program, and when the computer program is executed, the method according to any one of claims 1 to 11 is performed, or the method according to any one of claims 12 to 22 is performed.

27. A computer-readable storage medium, wherein the computer-readable storage medium is configured to store a computer program, and when the computer program is executed, the method according to any one of claims 1 to 11 is performed, or the method according to any one of claims 12 to 22 is performed.

28. A communication system, wherein the communication system comprises a first function entity and a second function entity, the first function entity is configured to perform the method according to any one of claims 1 to 11, and the second function entity is configured to perform the method according to any one of claims 12 to 22.
